# FASCICULE DE BREVET EUROPEEN

(11) **EP 3 427 190 B1**
(45) Date de publication et mention de la délivrance du brevet: **04.10.2023**
(21) Numéro de dépôt: 17708284.9
(22) Date de dépôt: 06.03.2017
(51) Int. Cl.: G06K 19/077

(54) **PROCEDE DE FABRICATION DE MODULE A PUCE DE CIRCUIT INTEGRE ET DISPOSITIF COMPRENANT UN TEL MODULE**
HERSTELLUNGSVERFAHREN EINES CHIPMODULS EINES INTEGRIERTEN SCHALTKREISES, UND VORRICHTUNG, DIE DIESES MODUL UMFASST
METHOD FOR MANUFACTURING A MODULE WITH AN INTEGRATED CIRCUIT CHIP AND DEVICE COMPRISING SUCH A MODULE

(30) Priorité: 07.03.2016 EP 16305256
(43) Date de publication de la demande: 16.01.2019
(73) Titulaire: Thales Dis France SAS, 92190 Meudon (FR)
(72) Inventeur: OTTOBON, Stéphane, 13881 GEMENOS Cedex (FR); CHARLES, Luc, 13881 GEMENOS Cedex (FR); LAVIRON, Thierry, 13881 GEMENOS Cedex (FR); DOSSETTO, Lucile, 13881 GEMENOS Cedex (FR)
(74) Mandataire: Milharo, Emilien
(86) Numéro de dépôt international: PCT/EP2017/055218
(87) Numéro de publication internationale: WO 2017/153353

(56) Documents cités:
- EP-A1- 2 811 427
- EP-A2- 1 039 543
- WO-A1-2009/020852

## Description

### Domaine de l'invention.

L'invention concerne la fabrication de modules électroniques, lesdits modules comprenant une puce de circuit intégré recouverte préférentiellement de matière isolante et connectée à des plages conductrices d'interconnexion.

Elle concerne plus particulièrement des dispositifs tels des cartes à puce, passeports électronique capables de fonctionner en sans-contact à l'aide d'une antenne intégrée dans un corps portant le module.

De tels dispositifs sans-contact sont destinés à réaliser diverses opérations, telles que, par exemple, des opérations bancaires, des opérations d'identification, des opérations de débit ou de rechargement d'unités de compte, et toutes sortes d'opérations qui peuvent s'effectuer à distance par couplage électromagnétique avec une borne d'émission-réception.

Ces dispositifs peuvent être conformes aux spécifications de l'ICAO (acronyme de l'expression anglo-saxonne "International Civil Aviation Organisation"), l'ISO7816 et/ou la norme ISO/IEC 14443.

### Art Antérieur.

Le brevet EP0972268, décrit un procédé de réalisation de module électronique illustré à la figure 1. Le procédé comprend une opération de soudage d'un fil conducteur entre chaque plot de puce et chaque plot d'une puce adjacente disposée sur une tranche de matériau semi-conducteur (wafer). Puis les puces ainsi reliées par paire sont individualisées par sciage de la tranche de matériau semi-conducteur ainsi que des fils reliant les puces entre elles.

Une goutte de résine de protection et de maintien peut être déposée sur la face avant de la puce. Cette résine permet en particulier un meilleur maintien des fils soudés dans les opérations de sciage et de montage ultérieur. La goutte est donc de préférence déposée sur chaque puce avant sciage de la tranche de matériau semi-conducteur.

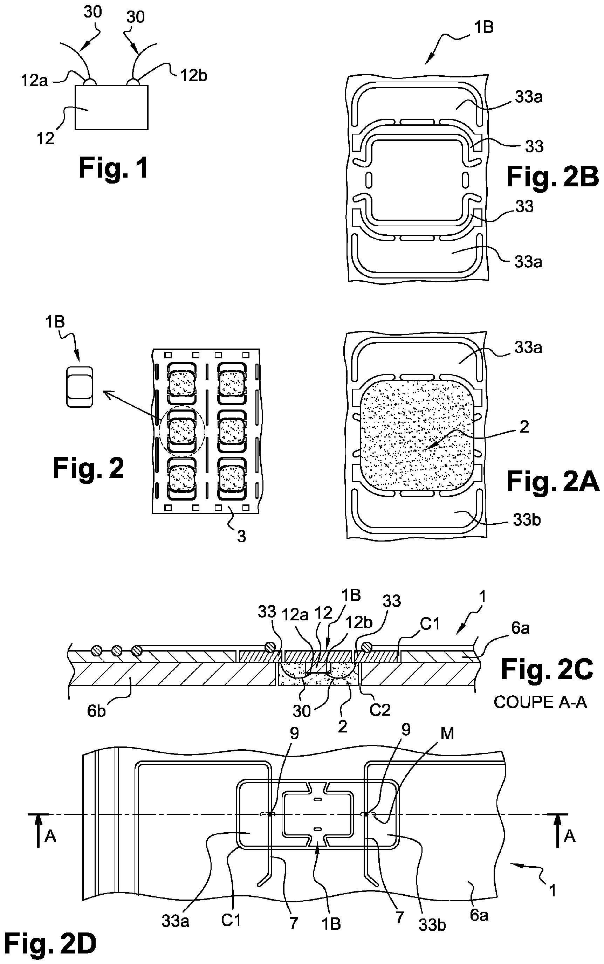

On connaît également un procédé de réalisation de modules à puce radiofréquence, utilisé actuellement et illustré aux figures 2-2D ; Dans ce procédé, on réalise des modules assez complexes, avec une puce reportée sur des métallisations présentées en ruban bobiné et connectée à ces métallisations par fil soudé.

La demande de brevet EP 2 811 427 décrit un procédé de fabrication d'une carte à puce sans-contact comportant un module électronique dans une cavité du corps de carte. Le module comprend des plages d'interconnexion connectées à une antenne disposée dans le corps de carte. Il comprend une matière souple ou élastique remplissant ou recouvrant au moins partiellement un interstice entre le module et le corps-support. Il décrit classiquement des connexions de puces à des plages de contact ou d'interconnexion par fils soudés.

Le document EP 1 039 543 A2 décrit un procédé de fabrication d'un connecteur à puce électronique, le connecteur comprenant une puce ainsi que des portions d'interconnexion reliées aux plots de contact de la puce. 1

Le document WO 2009/020852 A1 décrit un procédé de fabrication d'un dispositif RFID comprenant un module comprenant une puce reliée à des portions d'interconnexion soudées sur chaque plot de contact.

### Problème technique.

L'invention a pour objectif de proposer un procédé de fabrication de module plus économique et dont la structure facilite l'intégration sur un support et sa connexion électrique à un circuit électrique notamment à une antenne portée par le support. L'invention permet d'avoir une connexion entre le module électronique et le circuit électrique qui soit améliorée et fiable.

### Résumé de l'invention.

L'invention a pour objet un procédé de fabrication d'un dispositif selon la revendication 1.

Ainsi, l'invention propose de souder des plages d'interconnexion ou des portions saillantes d'interconnexion (nettement plus larges que les fils soudés de l'art antérieur), directement sur les plots de puce.

Elle propose également un procédé de connexion des modules ainsi configurés.

Avantageusement, les modules ainsi simplifiés et configurés permettent quand même des interconnexions par soudure ultrasons et/ou thermo compression des circuits filaires, comme pour des modules actuellement utilisés des figures 2, 2A, 2B.

Selon d'autres caractéristiques, du procédé :
- Ladite portion saillante comprend un ruban de soudure de largeur plus grande qu'une largeur de plot de contact ;
- Ladite portion saillante est soudée à la puce disposée sur un film support présenté sur bande de bobine ;
- Le module est reportée sur un substrat isolant portant ou destiné à porter un circuit électrique avec des bornes terminales et en ce que chaque portion saillante d'interconnexion est soudée ou connectée à une borne terminale correspondante du circuit électrique ;
- Chaque soudure est réalisée avec une portion saillante de ruban de soudure du module ;
   Chaque soudure est réalisée avec au moins deux fils de boucle du module et une borne terminale en forme de plaque ;
- Une pastille est plaquée sur la matière isolante de protection ou constitue cette matière de protection.
- Une pastille portant les rubans conducteurs de soudure est reportée sur les plots et la résine, chaque ruban conducteur connectant un plot correspondant.

### Description des figures.

- la figure 1 représente un module conforme à un premier procédé de l'art antérieur ;
- Les figures 2 - 2D représentent un module conforme à un second procédé de l'art antérieur ;
- les figure 3 - 3D représentent un module non couvert par l'invention ;
- les figures 4 - 4E représentent un module selon un mode de réalisation de l'invention.

### Description.

Les mêmes références d'une figure à l'autre désignent des éléments identiques ou similaires.

Sur la figure 1 (art antérieur), on a représenté un module 1B extrait d'une tranche semi-conductrice sur laquelle ont été réalisées classiquement des puces de circuit intégré.

Ce module électronique 1A comprend une puce de circuit intégré 12 comportant des plots de contact électriques 12a, 12b, un élément électrique 30 soudé à chaque plot ; De la matière isolante 2 peut enrober chaque plot 12a, 12b avant découpe de la tranche de matériau semi-conducteur (wafer).

Le module comprend une portion saillante d'interconnexion 30 d'élément électrique soudé à chaque plot de contact et s'étendant vers l'extérieur (hors de la matière isolante quand elle est présente).

L'élément soudé 30 est ici sous forme de portion de fil soudé (wire bonding).

Aux figures 2 et 2A est illustré un module 1B réalisé selon un second procédé de l'art antérieur. Ce module 1B est extrait d'une bande 3 de bobine, isolante électriquement, par découpe conformément à un procédé classique de production de module classique pour carte à puce. Alternativement, la bande (ou ruban) peut être sous forme de grille métallique ou d'un substrat isolant portant des métallisations gravées. La figure 2B représenté le verso du module de la figure 2A.

La figure 2C illustre le module 1B monté dans une cavité C2 de dispositif 1 et connecté à des bornes terminales d'antenne 7. Ce module électronique 1A comprend une puce de circuit intégré 12 comportant des plots de contact électriques 12a, 12b, un élément électrique 33, sous forme de plage conductrice métallique d'interconnexion reliée à chaque plot par fil soudé 30 ; De la matière isolante 2 enrobe chaque plot 12a, 12b et la puce avant découpe du module.

Le module comprend une portion saillante d'interconnexion 33a d'élément électrique soudée à chaque plot de contact de la puce (Fig. 2A) qui correspond à une extrémité externe de chaque élément d'interconnexion 33.

A la figure 2C, est illustré un dispositif au sens de l'invention mais appartenant à l'art antérieur. Il comprend le module 1B de la figure précédente dans un corps support du dispositif 1. Le corps comprend deux feuilles 6a, 6b plastiques superposées comportant respectivement une cavité C1, C2 de réception du module 1B.

Le module 1B est connecté à un circuit électrique 7 ici sous forme d'antenne en fil conducteur incrusté sur la feuille supérieure 6a. Les bornes 7 sont connectées chacune à une portion saillante d'interconnexion 33a, 33b d'élément électrique 31, 32 du module.

La connexion s'effectue par soudure 9 par thermo compression sous l'effet de l'application d'une sonde de thermo compression qui laisse généralement une marque M d'enfoncement de la pointe de thermo-compression TC sur les plages conductrices 33a, 33b.

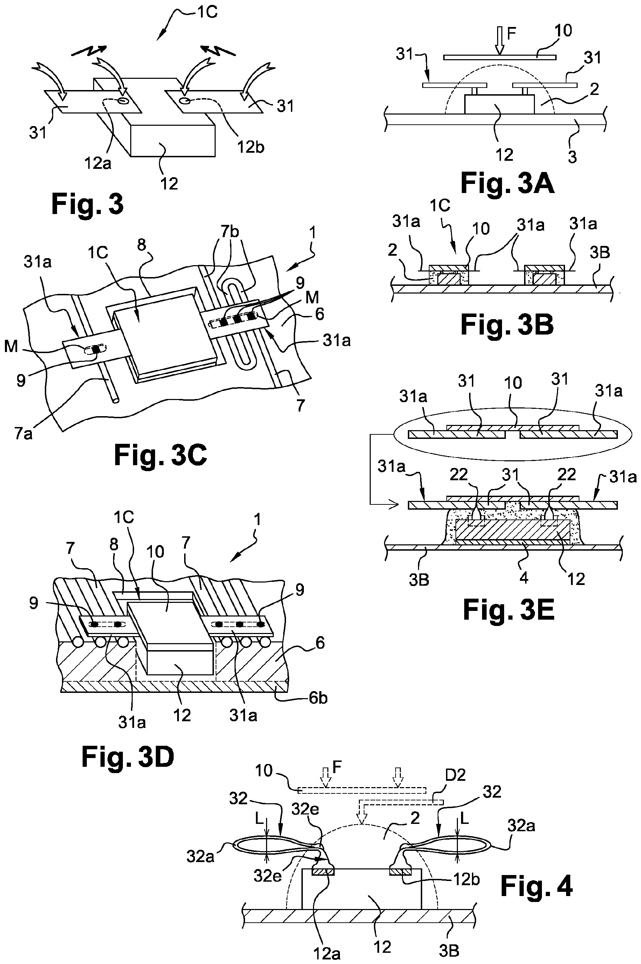

A la figure 3, est illustré un module électronique 1C; Le module 1C comprend comme précédemment une puce de circuit intégré 12 comportant des plots de contact électriques 12a, 12b, un élément électrique 31, 32 soudé à chaque plot ; Ces plots (stud bumps) sont de préférence saillants sur la puce ; Ils sont formés par ajout de matière conductrice notamment par soudure, sur les plots d'interface de la puce.

Le module comprend une portion saillante d'interconnexion 31a, 32a d'élément électrique soudé à chaque plot de contact 12a, 12b.

Comme indiqué ensuite, de la matière isolante 2 peut de préférence enrober chaque plot 12a, 12b.

Chaque portion saillante d'interconnexion 31a, 32a est configurée de manière à présenter une largeur d'interconnexion supérieure à 100 µm ou supérieure ou égale à la largeur de chaque plot de contact électrique 12a, 12b.

Dans l'exemple , chaque portion saillante est réalisée par des lames 31 soudées avec une technique sensiblement similaire à celle utilisée pour souder les fils 30 de la figure 1.

Ces lames de ruban conducteur peuvent avoir des largeurs comprises entre 50 µm et 300 um notamment.

Ces lames peuvent avoir une longueur ajustable comprise dans l'exemple notamment entre 2 mm et 5 mm.

Selon un premier mode, non couvert par l'invention, des étapes du procédé de fabrication d'un dispositif 1 comprenant ou constituant le module 1C sont décrites ci-après.

A la figure 3A, des puces 1C radiofréquences sont acheminées sur une bande diélectrique isolante 3 présentant une faible adhésivité sur laquelle sont fixées des puces de circuit intégré 12 notamment radiofréquences (Le procédé peut s'appliquer à des puces qui ne sont pas de type radiofréquence).

Ensuite, les lames 31 sont soudées et coupées à la longueur voulue. Puis, on procède de préférence au dépôt d'une goutte de matière isolante de protection 2 ; et dans la foulée, on applique « F » de manière connue une pastille isolante 10 sur la goutte notamment pour aplanir la goutte et rigidifier l'ensemble du module 1C.

Après séchage, on obtient à la figure 3B, un chapelet de modules sur le substrat 3, chaque module présentant des portions saillantes 31a s'étendant du module vers l'extérieur.

Dans le mode préféré avec matière d'enrobage, les portions 31a s'étendent hors de la résine ou matière isolante 2.

Selon une alternative de ce premier mode illustré à la figure 3E, les rubans conducteurs 31 sont portés par une pastille isolante 10 puis reportée sur les plots 12a, 12b et la résine ou matière isolante 2 déjà présente, chaque ruban conducteur 31a connectant un plot correspondant 12a, 12b en forme de pointe 22 au cours du report. Les plots pointus perforent les rubans 31 (ou plages conductrices 31) appliqués sous pression au report ou pour le moins permettent un contact électrique.

Dans l'exemple, les plots de puce sont préparés de manière connue avec des pointes saillantes (stud bumps). Ces pointes s'enfoncent au moins partiellement dans les rubans conducteurs. Le cas, échéant, on peut disposer de la matière conductrice anisotropique entre chaque plot pointu 22 et chaque ruban conducteur d'interconnexion 31.

Le cas échéant, (selon une variante non illustrée de ce mode), cette matière conductrice peut être déposée sur les éléments 31 sur un ruban isolant 3B de bobine, ce dernier portant un chapelet ou une pluralité de rubans conducteurs (ou plages conductrices d'interconnexion) 31, et la puce étant ensuite reportée dessus à chaque emplacement comportant une paire de rubans (ou plages) conducteurs. La matière conductrice anisotropique peut recouvrir au moins partiellement les flancs de la puce et rigidifier l'ensemble ainsi formé avant séparation du film support 3B.

Le module 1C est ensuite reporté sur un substrat isolant 6 portant ou destiné à porter (après report) un circuit électrique 7 avec des bornes terminales 7. Et ensuite, chaque portion saillante d'interconnexion 31a, 32a est soudée ou connectée à une borne terminale correspondante 7a, 7b du circuit électrique 7.

Dans l'exemple, cette étape est illustrée à la figure 3C et 3D.

Deux manières de connexion sont possibles A la figure 3D, on réalise une cavité 8 de réception d'une partie au moins du module puis on réalise des pistes de circuit 7 sur un support isolant tel une feuille plastique 6. Les pistes sont ici sont formée de fil conducteur incrusté par ultrasons. Des bornes terminales correspondante 7a, 7b du circuit électrique 7 sont disposées au bord de la cavité 8.

Ensuite, on dépose le module 1C de manière à ce que les bornes terminales 7a, 7b soient couvertes par une portion saillante 31a respective de ruban de soudure. La connexion s'effectue par soudure 9 par thermo compression TC sur au moins un ou plusieurs fils du circuit (ici le circuit 7 est une antenne mais pourrait être tout circuit électrique et/ ou électronique).

Alternativement, (fig. 3C) le module est reporté sur un support isolant 6 (de préférence dans une cavité 8 qui correspond à ses dimensions) ; Les plages 31a reposent sur le support isolant 6 et on réalise le circuit 7 sur le support isolant notamment par fil incrusté. Les portions terminales 7a, 7b du circuit passent sur les rubans conducteurs de soudure et la soudure 9 est effectuée par thermo-compression TC du fil sur chaque portion de ruban de soudure 31a.

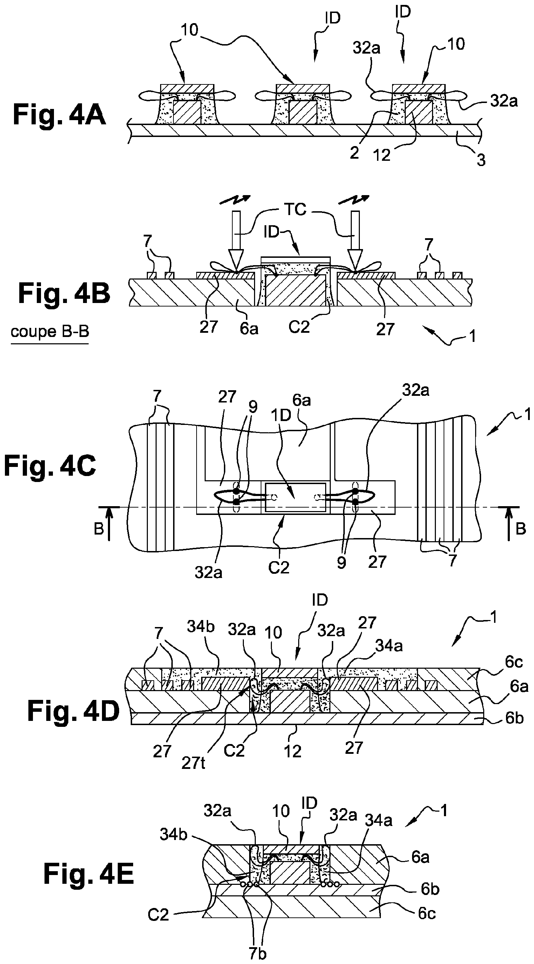

La figure 4 illustre un module et une étape correspondante du procédé de l'invention selon un mode de réalisation ou mise en oeuvre.

Selon ce mode, une puce 12 au moins est transportée ou présentée sur un substrat isolant 3B notamment en bande de bobine comme aux figures 3A-3C.

Toutefois, ce mode diffère du mode précédent en ce que la portion saillante 32a forme une boucle 32 présentant deux extrémités soudées 32e sur le même plot de contact 12a, 12b.

Une première soudure de fil est réalisée sur un plot 12a, 12b, ensuite le fil est déroulé et soudé à nouveau au même plot 12a, 12b en formant une boucle fermée au niveau de ses deux extrémités de soudure 32e.

Ainsi, le module est configuré de manière à présenter des portions d'interconnexion 32a plus larges (sur la largeur transversale L de la boucle) et plus rigides pour une meilleure tenue mécanique en utilisation.

Ensuite, le procédé prévoit de déposer une matière de protection 2 (une ou plusieurs goutte) comme précédemment par un outil de distribution de matière D2.

Ensuite de préférence, comme précédemment, on plaque avec une pression modérée F, une pastille isolante 10 d'aplanissement et/ou renfort sur la résine.

On obtient à la figure 4A, un chapelet de module comprenant des boucles saillantes d'interconnexion 32a qui s'étendent vers l'extérieur du module hors de la matière d'enrobage 2. La pastille permet ici de rabaisser les boucles bien à plat et perpendiculairement au flanc de puce.

Ces modules peuvent être reportés et connectés de différentes manières notamment comme décrit ci-après.

Selon une caractéristique préférée de ce mode, chaque soudure 9 est réalisée avec au moins deux fils de boucle 32 du module 1D et une borne terminale en forme de plaque 27. Toutefois, on peut envisager une seule soudure par boucle. La boucle apportant quand même de la rigidité et facilité de positionnement pour la connexion électrique.

Aux figures 4B et 4C, on réalise des pistes de circuit sur un support 6a (comprenant de préférence une cavité C2 de réception d'au moins une partie du module). Ce circuit comprend des bornes terminales d'interconnexion 27. Dans l'exemple, les pistes 7 sont des pistes de cuivre gravées et les bornes 27 sont des plages conductrices. La cavité peut être faite par usinage ou poinçonnage du support 6 ainsi que des bornes 27 qui bordent la cavité après poinçonnage.

Le module 1D est reporté sur le support 6a (de préférence dans la cavité C2). Les boucles sont en regard des plages 27 fig. 4C) ou reposent contre elles. Puis, on connecte par soudure notamment thermocompression TC au moins un fil, ou de préférence deux fils de chaque boucle pour une meilleure connexion et conduction électrique. La boucle permet de maintenir ensemble les deux portions de fils soudées à la puce pendant les différentes opérations susvisées et facilite la manipulation et la soudure. La boucle et deux soudures permettent aussi d'améliorer la fiabilité des connexions électriques.

Alternativement, chaque boucle peut être connectée à l'aide de toute connexion 9 réalisée avec de la colle argent, de la brasure ou par soudure laser à chaque borne terminale 27 d'un circuit électrique et/ou électronique 7.

Sur la figure 4E, on réalise un circuit dans un corps support isolant, par exemple, par lamination et assemblage d'une feuille 6a portant le circuit électrique (tel une antenne) avec plusieurs feuilles 6b, 6c. Les bornes terminales d'interconnexion 7b sont mises à jour et à nu (le cas échéant) par usinage d'une cavité C2 à travers une feuille supérieure 6a. On place le module 1D obtenu précédemment, dans la cavité C2. Les boucles peuvent se plier dans la cavité. Puis, on dispose dans la cavité deux gouttes de la colle conductrice (notamment contenant des particules en argent) au niveau de chaque boucle de manière que la colle conductrice 34a, 34b séparément effectue la conduction électrique entre chaque borne terminale 7b et chaque portion saillante de boucle correspondante.

A la figure 4D, on réalise le circuit 7 et les bornes d'interconnexion 27 sur un support isolant 6a, de préférence par gravure. Une cavité C2 est également réalisée notamment par usinage ou poinçonnage dans le support 6a de manière à avoir les bords des bornes 27 en bordure de la cavité. Puis, on réalise un assemblage avec une ou plusieurs feuille(s) 6b. Le module est reporté de manière à ce que les portions 32a de boucle se présentent de préférence en contact électrique avec les tranches 27t des plages conductrices 27 en bordure de la cavité.

Deux gouttes de colle conductrices en partie dans la cavité et sur les bornes terminales connectent électriquement et séparément les bornes 27 aux portions de boucle 32a.

D'autres modes de connexion sont possibles avec notamment de la colle anisotropique sous forme de film ou de pâte ACF, ACP à la place de la colle conductrice 34a ou à la place des soudures 3C ou 3D.

Il peut s'avérer nécessaire de séparer deux masses de colle conductrice distribuées (notamment colle argent) par un isolant (ce dernier pouvant être déposé par distribution également ou autre) pour éviter un risque de court-circuit entre les masses de colle conductrice.

La matière isolante 2 peut être remplacée par une pastille isolante notamment thermoplastique. La pastille peut être appliquée sur la puce et les portions puis ramollie par température et pression pour recouvrir et fixer la puce et les portions d'interconnexion visées par l'invention.

La pastille peut être prévue avec une épaisseur suffisante par exemple deux à trois fois la hauteur des plots pointus 22 ou des fils soudés 32. Ainsi, pendant un ramollissement et pression, la pastille peut être pénétrée en partie par la puce portant les plots et/ou les portions d'interconnexion contribuant ainsi à la stabilité de l'ensemble.

Dans une variante, le module 1C peut ne pas comprendre de matière isolante par-dessus ni de pastille.

## Revendications

1. Procédé de fabrication d'un dispositif (1) comprenant ou constituant un module électronique (1A, 1B, 1C) ledit module comprenant une puce de circuit intégré (12) comportant des plots de contact électriques (12a, 12b), de la matière isolante (2) recouvrant au moins chaque plot (12a, 12b), une portion saillante d'interconnexion 32a) d'élément électrique reliée directement à chaque plot de contact et s'étendant vers l'extérieur,
**caractérisé en ce que** chaque portion saillante d'interconnexion 32a) est soudée sur chaque plot de contact et est configurée de manière à présenter une largeur d'interconnexion supérieure à 100 µm ou supérieure ou égale à la largeur de chaque plot de contact électrique (12a, 12b), ladite portion saillante (32a) formant une boucle 32 présentant deux extrémités soudées (32e) sur le même plot de contact (12a, 12b).

2. Procédé selon la revendication 1, **caractérisé en ce que** ladite portion saillante (32a) est soudée à la puce (12), celle-ci étant disposée sur un film support (3) présenté sur bande (5) de bobine.

3. Procédé selon l'une des revendications précédentes, **caractérisé en ce que** le module (1C, 1D) est reportée sur un substrat isolant (6) portant ou destiné à porter un circuit électrique (7) avec des bornes terminales (7a), et **en ce que** chaque portion saillante d'interconnexion 32a) est soudée ou connectée à une borne terminale correspondante (7a, 7b) du circuit électrique (7).

4. Procédé selon l'une des revendications 1 à 3, **caractérisé en ce que** chaque soudure 9 est réalisée avec au moins deux fils de boucle (32) du module (1D) et une borne terminale en forme de plaque (27).

5. Procédé selon l'une quelconque des revendications précédentes, **caractérisé en ce qu'**une pastille isolante (10) est plaquée sur la matière isolante.

6. Procédé selon la revendication 1 **caractérisé en ce que** chaque boucle est connectée, par des connexions (9) réalisées avec de la colle argent, de la brasure ou par soudure laser, à des bornes terminales (27) d'un circuit électrique et/ou électronique (7).

7. Module électronique, ledit module comprenant une puce de circuit intégré (12) comportant des plots de contact électriques (12a, 12b), de la matière isolante (2) recouvrant au moins chaque plot, une portion saillante 32a) d'interconnexion d'un élément électrique (31, 32) reliée directement à chaque plot de contact et s'étendant vers l'extérieur,
**caractérisé en ce que** chaque portion saillante 32a) d'interconnexion est soudée sur chaque plot de contact et est configurée de manière à présenter une largeur d'interconnexion supérieure à 100 µm ou supérieure ou égale à la largeur de chaque plot de contact électrique, ladite portion saillante (32a) formant une boucle 32 présentant deux extrémités soudées (32e) sur le même plot de contact (12a, 12b).

8. Module électronique selon la revendication précédente **caractérisé en ce que** ladite portion saillante 32a) d'interconnexion s'étend hors de la matière isolante (2).

9. Dispositif (1) comprenant le module (1C, 1D) selon la revendication précédente.

## Patentansprüche

1. Verfahren zum Herstellen einer Vorrichtung (1), umfassend oder bildend ein elektronisches Modul (1A, 1B, 1C), das Modul umfassend einen Chip (12) mit integriertem Schaltkreis, der elektrische Kontaktstücke (12a, 12b) aufweist, Isoliermaterial (2), das mindestens jedes Stück (12a, 12b) bedeckt, einen vorspringenden Zusammenschaltungsabschnitt(32a) eines elektrischen Elements, der mit jedem Kontaktstück direkt verbunden ist und sich nach außen erstreckt,
**dadurch gekennzeichnet, dass** jeder vorspringende Zusammenschaltungsabschnitt (32a) auf jedem Kontaktstück geschweißt ist und konfiguriert ist, um eine Zusammenschaltungsbreite von größer als 100 µm oder größer als oder gleich der Breite jedes elektrischen Kontaktstücks (12a, 12b) vorzuweisen, wobei der vorspringende Abschnitt (32a) eine Schleife 32 ausbildet, die zwei verschweißte Enden (32e) auf demselben Kontaktstück (12a, 12b) vorweist.

2. Verfahren nach Anspruch 1, **dadurch gekennzeichnet, dass** der vorspringende Abschnitt (32a) an den Chip (12) geschweißt ist, wobei dieser auf einer Trägerfolie (3) angeordnet ist, die auf einem Spulenband (5) vorliegt.

3. Verfahren nach einem der vorstehenden Ansprüche, **dadurch gekennzeichnet, dass** das Modul (1C, 1D) auf ein Isoliersubstrat (6) übertragen wird, das einen elektrischen Schaltkreis (7) mit Endpolklemmen (7a) trägt oder dafür bestimmt ist, diesen zu tragen, **und dadurch, dass** jeder vorspringende Zusammenschaltungsabschnitt (32a) an eine entsprechende Endpolklemme (7a, 7b) des elektrischen Schaltkreises (7) geschweißt oder mit dieser verbunden ist.

4. Verfahren nach einem der Ansprüche 1 bis 3, **dadurch gekennzeichnet, dass** jede Schweißstelle 9 mit mindestens zwei Schleifendrähten (32) des Moduls (1D) und einer plattenförmigen Endpolklemme (27) ausgeführt ist.

5. Verfahren nach einem der vorstehenden Ansprüche, **dadurch gekennzeichnet, dass** eine Isolieranschlussfläche (10) auf dem Isoliermaterial plattiert ist.

6. Verfahren nach Anspruch 1, **dadurch gekennzeichnet, dass** jede Schleife durch Anschlüsse(9), die mit Silberklebstoff ausgeführt sind, der Lötung oder durch Laserschweißen an Endpolklemmen (27) eines elektrischen und/oder elektronischen Schaltkreises (7) angeschlossen ist.

7. Elektronisches Modul, das Modul umfassend einen Chip (12) mit integriertem Schaltkreis, der elektrische Kontaktstücke (12a, 12b) aufweist, Isoliermaterial (2), das mindestens jedes Stück bedeckt, einen vorspringenden Zusammenschaltungsabschnitt (32a) eines elektrischen Elements (31, 32), der mit jedem Kontaktstück direkt verbunden ist und sich nach außen erstreckt,
**dadurch gekennzeichnet, dass** jeder vorspringende Zusammenschaltungsabschnitt (32a) auf jedem Kontaktstück geschweißt ist und konfiguriert ist, um eine Zusammenschaltungsbreite von größer als 100 µm oder größer als oder gleich der Breite jedes elektrischen Kontaktstücks vorzuweisen, wobei der vorspringende Abschnitt (32a) eine Schleife 32 ausbildet, die zwei verschweißte Enden (32e) auf demselben Kontaktstück (12a, 12b) vorweist.

8. Elektronisches Modul nach dem vorstehenden Anspruch, **dadurch gekennzeichnet, dass** sich der vorspringende Zusammenschaltungsabschnitt (32a) außerhalb des Isoliermaterials (2) erstreckt.

9. Vorrichtung (1), umfassend das Modul (1C, 1D) nach dem vorstehenden Anspruch.

## Claims

1. A method for manufacturing a device (1) comprising or forming an electronic module (1A, 1B, 1C) said module comprising an integrated circuit chip (12) having electrical contact pads (12a, 12b), insulating material (2) covering at least each pad (12a, 12b), and a protruding interconnection portion (32a) of an electrical element, which portion is connected directly to each contact pad and extends outwardly,
**characterized in that** each protruding interconnection portion (32a) is bonded to each contact pad and is configured to have an interconnection width greater than 100 µm or greater than or equal to the width of each electrical contact pad (12a, 12b), said protruding portion (32a) forming a loop 32 having two ends (32e) bonded to the same contact pad (12a, 12b).

2. The method according to claim 1, **characterized in that** said protruding portion (32a) is bonded to the chip (12), the latter being arranged on a support film (3) presented on a coil strip (5).

3. The method according to any of the preceding claims, **characterized in that** the module (1C, 1D) is mounted on an insulating substrate (6) carrying or intended to carry an electrical circuit (7) with end terminals (7a), **and in that** each protruding interconnection portion (32a) is bonded or connected to a corresponding end terminal (7a, 7b) of the electrical circuit (7).

4. The method according to any of claims 1 to 3, **characterized in that** each bond 9 is made with at least two loop wires (32) of the module (1D) and a plate-shaped end terminal (27).

5. The method according to any of the preceding claims, **characterized in that** an insulating pellet (10) is pressed onto the insulating material.

6. The method according to claim 1 **characterized in that** each loop is connected, by connections (9) made with silver glue, solder or laser welding, to end terminals (27) of an electrical and/or electronic circuit (7).

7. An electronic module, said module comprising an integrated circuit chip (12) having electrical contact pads (12a, 12b), insulating material (2) covering at least each pad, and a protruding interconnection portion (32a) of an electrical element (31, 32), which portion is connected directly to each contact pad and extends outwardly,
**characterized in that** each protruding interconnection portion (32a) is bonded to each contact pad and is configured to have an interconnection width greater than 100 µm or greater than or equal to the width of each electrical contact pad, said protruding portion (32a) forming a loop 32 having two ends (32e) bonded to the same contact pad (12a, 12b).

8. The electronic module according to the preceding claim, **characterized in that** said protruding interconnection portion (32a) extends outside the insulating material (2).

9. A device (1) comprising the module (1C, 1D) according to the preceding claim.
